# EUROPÄISCHE PATENTSCHRIFT

(11) **EP 2 134 600 B1**
(45) Veröffentlichungstag und Bekanntmachung des Hinweises auf die Patenterteilung: **29.02.2012**
(21) Anmeldenummer: 08716406.7
(22) Anmeldetag: 10.03.2008
(51) Int. Cl.: B64D 9/00, B60P 7/08

(54) **NETZANORDNUNG FÜR EINEN FRACHTRAUM, VORZUGSWEISE IN EINEM FLUGZEUG**
NET ARRANGEMENT FOR A CARGO COMPARTMENT, PREFERABLY IN AN AIRCRAFT
AGENCEMENT DE FILET POUR UNE SOUTE, DE PREFERENCE DANS UN AVION

(30) Priorität: 13.03.2007 DE 102007012108
(43) Veröffentlichungstag der Anmeldung: 23.12.2009
(73) Patentinhaber: Telair International AB, 224 78 Lund (SE)
(72) Erfinder: HELMNER, Anders, S-224 78 Lund (SE); CHRISTOFFERSSON, Örjan, S-224 78 Lund (SE); ALAVI, Majid, S-224 78 Lund (SE)
(74) Vertreter: Kuhnen & Wacker
(86) Internationale Anmeldenummer: PCT/EP2008/001897
(87) Internationale Veröffentlichungsnummer: WO 2008/110328

(56) Entgegenhaltungen:
- DE-A1- 19 953 615
- DE-U1-202004 014 965
- US-A1- 2002 009 346

## Beschreibung

Die vorliegende Erfindung betrifft eine Netzanordnung für einen Frachtraum, vorzugsweise in einem "Narrow-Body"-Flugzeug, sowie einen Adapter hierfür.

Neben Kleinflugzeugen, wie beispielsweise Leichtflugzeuge oder Sportflugzeuge, wird bei Verkehrsflugzeugen üblicherweise zwischen zwei Haupttypen von Verkehrsflugzeugen unterschieden: Den sogenannten "Narrow-Body"-Flugzeugen und den "Wide-Body"- oder Großraum-Flugzeugen.

Die Narrow-Body-Flugzeuge haben einen Rumpfdurchmesser von bis zu fünf Metern, und verfügen über zwei Sitzreihen, die durch einen entlang der Flugzeuglängsachse verlaufenden Gang voneinander getrennt sind.

Bei den Wide-Body-Flugzeugen ist der Rumpfdurchmesser größer als 5 Meter. Die Wide-Body-Flugzeuge verfügen ferner über zumindest zwei Stockwerke mit jeweils drei Sitzreihen, wobei diese Sitzreihen durch zwei entlang der Flugzeuglängsachse verlaufende Gänge getrennt sind.

Bei den Wide-Body- oder Großraum-Flugzeugen wird das Gepäck, Frachtgüter und dergleichen üblicherweise in entsprechend dafür vorgesehenen, großvolumigen Frachtcontainern untergebracht, welche dann ihrerseits im Frachtraum der Wide-Body-Flugzeuge verstaut und dort entsprechend gesichert werden.

Demgegenüber wird das Gepäck sowie weitere Ladung bei Narrow-Body-Flugzeugen meist in Form von lose übereinander gestapeltem Stückgut oder in kleineren Transportkisten im Laderaum untergebracht, wie dies beispielsweise in der als WO 03/076267 veröffentlichten PCT/EP03/02494 der selben Anmelderin beschrieben ist.

Zur zusätzlichen Sicherung solch losen Stückguts sind in den Flugzeugfrachträumen üblicherweise Netze gespannt, mittels welcher die Fracht zurück gehalten werden soll, damit diese nicht, beispielsweise bei einer Notlandung, einer unerwarteten plötzlichen Richtungsänderung des Flugzeugs, bei heftigen Turbulenzen, oder dergleichen, unkontrolliert durch den Frachtraum geschleudert wird, und dadurch die Sicherheit des Personals, welches sich beispielsweise bei Postflugzeugen, wie sie von UPS und dergleichen eingesetzt werden, evtl. gerade im Frachtraum befindet, sowie auch die Sicherheit des Flugzeugs gefährden kann.

Die hierbei verwendeten Fracht- bzw. Gepäcknetze werden dabei mittels entsprechender am Netz ausgebildeter Befestigungspunkte, die üblicherweise in Form von Gurtelementen, Laschen, Ösen, Ringen oder dergleichen ausgebildet sind, mit frachtraumseitigen Befestigungspunkten verbunden, um die auf das Netz aufgebrachten Kräfte als Zugkräfte in die Flugzeugstruktur abzuleiten.

Diese frachtraumseitigen Befestigungspunkte sind dabei in der Regel in vom Hersteller des Flugzeugs vorbestimmten Abständen über den Umfang des Frachtraums verteilt bzw. angeordnet und sind derart angebracht, daß sie die darauf vermittels des Netzes übertragenen Zugkräfte bzw. Lasten direkt in die darunter liegende Tragstruktur des Flugzeugs ableiten können.

Zudem können die Befestigungspunkte je nach Flugzeughersteller in unterschiedliche Arten untergliedert werden, die ihrerseits wiederum unterschiedliche Zugkräfte bzw. Lasten aufnehmen können.

So sind die frachtraumseitigen Befestigungspunkte bei Airbus beispielsweise in sogenannte "Netzbefestigungspunkte", die an der Frachtraumdecke ausgebildet sind, und "Tie-down-Punkte", die am Boden des Frachtraums ausgebildet sind, unterteilt. Die von Airbus definierten Netzbefestigungspunkte können dabei bis zu 5,9 kN Scherlast und 6,8 kN Spannungslast aufnehmen, und die Tie-down-Punkte können bis zu 8,9 kN Last in jede Richtung aufnehmen.

An diesen Befestigungspunkten werden dann, wie vorstehend erläutert, am Netz ausgebildete Befestigungspunkte fest gemacht, um somit das Netz im Frachtraum zu befestigen, und die auf das Netz wirkende Kraft oder Last in die Flugzeugstruktur einzuleiten. Die netzseitig ausgebildeten Befestigungspunkte sind hierbei üblicherweise z.B. in Form von Laschen, Ösen, Haken oder dergleichen ausgebildet, die im Randbereich des Netzes angeordnet sind.

Ein Beispiel einer derartigen Netzanordnung zur Sicherung von Gepäck auf dem Hauptdeck eines Frachtflugzeugs ist aus der US 6,435,786 D1 bekannt. Bei der in dieser Druckschrift offenbarten Anordnung ist ein mit radial verlaufenden Maschen ausgebildetes Gepäcknetz im Frachtraum eines Flugzeugs lose, d.h. ohne Spannung, in frachtraumseitigen Befestigungspunkten eingehängt, um die geladenen Frachtstücke an einer unerwünschten Bewegung durch den Frachtraum zu hindern, wobei das Netz so konzipiert ist, daß es sich bei Überschreiten einer bestimmten Grenzlast gegebenenfalls weiter dehnen kann.

Problematisch bei dieser Art von Netzanordnung ist es jedoch, daß in Bereichen, in denen keine frachtraumseitigen Befestigungspunkte vorgesehen sind, das Netz nicht befestigt werden kann.

Um dennoch eine ausreichende Sicherung der Ladung zu gewährleisten, ist es daher notwendig, das Netz mit entsprechend langen Teilabschnitten auszubilden, die dann in weiter hinten im Frachtraum angeordneten Befestigungspunkten eingehängt werden. Hierbei kann es jedoch vorkommen, daß in bestimmten Bereichen, insbesondere in Bereichen mit Aussparungen, wie beispielsweise Fensterbereichen, selbst mit entsprechend lang ausgebildeten Netzabschnitten ein Verbinden der netzseitigen Befestigungspunkte mit den frachtraumseitigen Befestigungspunkten nicht möglich ist.

Um dieses Problem zu lösen schlägt die US 5,915,652 A eine Netzanordnung zur Sicherung von Gepäck im Frachtraum eines Flugzeugs vor, bei welcher ein Gepäcknetz an frachtraumseitigen Befestigungspunkten, sowie an zusätzlichen Befestigungspunkten in Form von frei um eine Achse schwingenden Bügeln angebracht ist. Diese Bügel sind dabei schwenkbar an frachtraumseitigen Befestigungspunkten angelenkt, stellen zusätzliche weitere Befestigungspunkte zur Verfügung, mit welchen das Netz verbunden werden kann, und sollen z.B. einen Fensterbereich überbrücken. Wie schon bei der US 6,435,786 D1 ist das Gepäcknetz auch bei der US 5,915,652 A lose bzw. schlaff, d.h. ohne Vorspannung, in den Befestigungspunkten eingehängt.

Eine andere Netzanordnung für den Frachtraum eines Flugzeugs ist in der EP 1 539 571 B1 offenbart. Hierbei wird das Gepäcknetz in frachtraumseitigen Befestigungspunkten angebracht und zusätzlich mittels weiteren Vorspannelementen, die an von den Netzbefestigungspunkten ausgehend weiter vorne im Frachtraum angeordneten Befestigungspunkten befestigt sind, auf eine vorbestimmte Spannung und damit auf eine vordefinierte Form gebracht. Zugleich soll damit erreicht werden, daß ein von einem frachtraumseitigen Befestigungspunkt bis zum Schnittpunkt mit dem weiteren Vorspannelement reichender Endabschnitt des Netzes eine in Flugzeuglängsrichtung nach Vorne weisende, vordefinierte Richtung aufweist, so daß eine auf diese Weise in den Befestigungspunkt eingeleitete Zugkraft, gleichsam wie ein Kraftvektor, eine vordefinierte Richtung mit bekannter Längs- und Quer- bzw. Hochkomponente (x-, y- und z-Komponente) aufweist.

Eine andere Art von Netzanordnung ist ferner in der WO 03/024792 A1 offenbart. Hierbei wird zur Sicherung von Ladung im Frachtraum eines Flugzeugs ein umlaufender, steifer Rahmen im Frachtraum angeordnet, an dem wiederum das Gepäcknetz befestigt ist.

Die in der WO 03/024792 A1 diskutierte Netzanordnung setzt jedoch voraus, daß für jeden Flugzeugtyp eine andere spezifische Rahmenkonstruktion zur Verfügung gestellt werden muss, damit diese dann in den jeweils unterschiedlichen Frachträumen angebracht werden kann. Nachteilig sind die hierdurch zwangsweise aufgrund der zahlreichen, notwendigen Rahmenkonstruktionen entstehenden, relativ hohen Kosten. Ferner ist der zusätzliche hohe Fertigungs- und Montageaufwand von Nachteil.

Dokument US2002/0008346 offenbart eine Netzanordnung, die alle Merkmale des Oberbegriffs des Anspruchs 1 aufweist und wird als nächstliegender stand der Technik angesehen.

Die aus dem Stand der Technik bekannten Netzanordnungen, die überwiegend in den eingangs beschriebenen, sogenannten Narrow-Body-Flugzeugen verwendet werden, weisen dabei jedoch neben den bereits vorstehend angeführten Nachteilen eine Reihe weiterer Nachteile auf.

So ist es durch die schlaffe bzw. lose oder lockere Anbringung der Gepäcknetze im Frachtraum nicht möglich, bei einer plötzlich auf das Netz aufgebrachten Last einen gleichmäßigen, vordefinierten Krafteintrag in alle frachtraumseitigen Befestigungspunkten zu erreichen.

Darüber hinaus besteht das Problem, daß, da frachtraumseitig nicht an allen hierfür notwendigen oder wünschenswerten Stellen Befestigungspunkte ausgebildet sind, welche das Netz aufnehmen bzw. halten könnten, eine umlaufende Befestigung des Netzes nicht immer erreicht werden kann, wodurch die Last, welche das Netz aufnehmen und ableiten muss, ggf. auf einige wenige frachtraumseitige Befestigungspunkte verteilt wird, wodurch die insgesamt verteilbare Gesamtlast verringert wird, da die von einem Befestigungspunkt aufnehmbare maximale Last begrenzt ist.

Zur Lösung dieses Problems schlägt, wie vorstehend angeführt, die US 5,915,652 A die Verwendung eines um eine Achse freischwingenden Adapters bzw. Bügels vor, um entsprechend ausreichend Befestigungspunkte zur Verfügung zu stellen.

Obgleich hierbei mittels des freischwingenden Bügels bzw. Adapters zwar zusätzliche Befestigungspunkte für das Netz bereitgestellt werden könnten, ist es aufgrund der weiterhin losen Anbringung des Gepäcknetzes im Frachtraum und an den Bügeln bzw. Adaptern nicht möglich, einen gleichmäßigen Krafteintrag in alle frachtraumseitigen Befestigungspunkte zu erzielen.

Ferner bringt die in der US 5,915,652 A offenbarte Lösung den Nachteil mit sich, daß durch die Ausbildung einer Mehrzahl von Befestigungspunkte auf diesen Adaptern, welche die Zahl der frachtraumseitigen Befestigungspunkte, an denen die Adapter befestigt sind, übersteigt, schließlich eine insgesamt erhöhte Last auf die frachtraumseitigen Befestigungspunkte aufgebracht wird, an welchen die Adapter freischwingend befestigt sind. damit ist eine Überlastung der frachtraumseitigen Befestigungspunkte vorprogrammiert.

Die in der EP 1 539 571 B1 schließlich diskutierte Netzanordnung wiederum erfordert das Vorhandensein entsprechend speziell dafür konzipierter Netze, die dabei neben den üblichen netzseitigen Befestigungspunkten weitere Befestigungselemente aufweisen, die dann in zusätzliche frachtraumseitige Befestigungspunkte eingebracht werden können, um das Netz sackförmig in Flugzeuglängsrichtung nach Vorne vorzuspannen, wie dies beispielsweise in den Figuren 1 und 2 der EP 1 539 571 B1 dargestellt wird. Alternativ können auch herkömmliche Frachtnetze verwendet werden, wobei dann zusätzliche Haltelemente beim Anbringen der Netze im Frachtraum am Netz befestigt werden müssen, um dieses entsprechend vorzuspannen, was sich jedoch negativ in den Kosten niederschlägt und die Handhabung umständlich macht. Zudem geht durch die aufgeprägte Vorwölbung kostbarer Frachtraum verloren.

Ausgehend von den vorstehend diskutierten Netzanordnungen für einen Flugzeugfrachtraum ist es eine Aufgabe der vorliegenden Erfindung, unter Vermeidung der vorstehend diskutierten Nachteile des Standes der Technik, eine Netzanordnung für einen Frachtraum, vorzugsweise in einem Flugzeug, zur Verfügung zu stellen, die kostengünstig hergestellt und universell eingesetzt werden kann.

Ein Aspekt der Erfindung ist, eine Netzanordnung für einen Frachtraum, vorzugsweise in einem Flugzeug, zur Verfügung zu stellen, mittels welcher unabhängig von der Anzahl oder tatsächlichen Verfügbarkeit von konstruktionsbedingt begrenzt zur Verfügung stehenden, frachtraumseitig ausgebildeten Befestigungspunkten, eine möglichst gleichmäßige Einbringung der auf das Frachtnetz wirkenden Kräfte in die tatsächlich benutzten Befestigungspunkte des Frachtraumes, bei möglichst optimaler Ausschöpfung der in den jeweiligen frachtraumseitigen Befestigungspunkt einleitbaren, vom Flugzeughersteller vordefinierten maximalen Kraft möglich ist, ohne Überschreitung der zulässigen Grenzwerte, und ohne, daß hierfür ein spezielles Netz erforderlich ist.

Ein weiterer Aspekt der Erfindung ist es, eine Netzanordnung für einen Frachtraum, vorzugsweise in einem Flugzeug, zur Verfügung zu stellen, mittels der die vom Netz im Einsatzfall insgesamt in die Flugzeugstruktur ableitbare Gesamtlast im Vergleich zu aus dem Stand der Technik bereits bekannten Netzanordnungen erhöht werden kann.

Ein weiterer nicht beanspruchten Aspekt der vorliegenden Erfindung ist es, einen hierzu geeigneten Adapter bereit zu stellen, vorzugsweise zur Verwendung in einer solchen Netzanordnung.

Die vorstehende Aufgabe wird gelöst durch die Netzanordnung gemäß Anspruch 1.

Hierzu wird, gemäß einem ersten Aspekt der Erfindung eine Netzanordnung für einen Frachtraum, vorzugsweise in einem Flugzeug, vorgeschlagen, mit: zumindest einem Netz mit einer Mehrzahl von, randseitig am Netz ausgebildeten, Befestigungspunkten, und zumindest einem Adapter zur Befestigung des Netzes im Laderaum. Der Adapter ist dabei an zumindest zwei von einer Mehrzahl von frachtraumseitigen Befestigungspunkten anbringbar zur Ableitung einer auf den Adapter aufgebrachten Last in die zumindest zwei frachtraumseitigen Befestigungspunkte, wobei der Adapter im Kraftweg zwischen den, vorzugsweise randseitig ausgebildeten, Netzbefestigungspunkten und den frachtraumseitigen Befestigungspunkten angeordnet ist.

Der Adapter stellt ferner zumindest einen adapterseitigen Befestigungspunkt zum Befestigen des Netzes am Adapter bereit, wobei die Befestigungspunkte für das Netz in einer Ebene identisch zur Ebene der adapterseitigen Befestigungspunkte angeordnet sind, unabhängig von der auf das Netz aufgebrachten Last, und wobei sich das Netz in der gleichen Ebene wie die adapterseitigen Befestigungspunkte befindet, solange keine Last auf das Netz aufgebracht wird.

Mittels der vorstehend beschriebenen Netzanordnung ist es dabei erstmals vorteilhaft möglich, im Lastfall die durch die als lose gestapeltes Stückgut vorliegende Ladung auf das Netz aufgebrachte Last gleichmäßig in alle frachtraumseitigen Befestigungspunkte einzuleiten.

Durch die Adapter kann zudem sicher gestellt werden, daß auch an Stellen, an denen keine, oder nicht ausreichend viele frachtraumseitige Befestigungspunkte vorgesehen sind, die zur Befestigung des Netzes dienen könnten, adapterseitig ausgebildete Befestigungspunkte zur Befestigung des Netzes bereitgestellt werden können, wodurch das Netz in vorteilhafter Weise über den gesamten Umfang des Frachtraums sicher angebracht werden kann.

Darüber hinaus ist es bei der erfindungsgemäßen Netzanordnung nicht notwendig, ein extra für den jeweiligen Frachtraum konzipiertes Netz zu verwenden, das dann entweder über unterschiedlich lange Gurtelemente, die an den jeweiligen Randbereichen des Netzes ausgebildet sind, in die jeweils verfügbaren frachtraumseitigen Befestigungspunkte eingehängt werden kann, wie dies beispielsweise in der US 6,435,786 D1 oder in der US 5,915,652 A diskutiert ist.

Auch ein speziell ausgebildetes Netz das neben den üblichen netzseitigen Befestigungspunkten weitere Befestigungselemente aufweist, die dann, wie in der EP 1 539 571 B1 diskutiert, in zusätzliche frachtraumseitige Befestigungspunkte eingebracht werden können, um das Netz vorzuspannen, ist ebenso wenig notwendig, wie das Anbringen zusätzlicher Haltelemente am Netz zur Befestigung desselben gemäß der in der EP 1 539 571 B1 diskutierten Anordnung.

Stattdessen kann bei der erfindungemäßen Netzanordnung ein Netz verwendet werden, daß eine einfache, im Wesentlichen gleichmäßige Struktur aufweist, und somit kostengünstig herzustellen sowie ohne zusätzlichen Aufwand montierbar ist. Insbesondere kann bei der erfindungsgemäßen Netzanordnung ein Standardgepäcknetz zur Sicherung der als loses Stückgut vorliegenden Fracht verwendet werden.

Weiter vorteilhaft ist, daß hiermit symmetrische Netze mit unterbrechungsfrei durchlaufenden Netzlinien verwendet werden können, die keine Absätze oder Stufen in den Kraftlinien aufweisen und eine möglichst homogene und einfach vorhersagbare Kraftableitung ermöglichen.

Zusätzlich bringt die erfindungsgemäße Netzanordnung den Vorteil mit sich, daß, entgegen der teilweise auch verwendeten Netzanordnungen mit einem durchgehenden, umlaufenden Rahmen aus hochfestem Material, an welchem das Gepäcknetz befestigt ist, aufgrund des modularen Aufbaus eine einfache und problemlose Verwendung in vielen unterschiedlichen Flugzeugtypen möglich ist.

Dementsprechend ist es mit der erfindungsgemäßen Netzanordnung ebenfalls nicht erforderlich, für die unterschiedlichen Flugzeugtypen unterschiedliche Rahmenkonstruktionen zur Befestigung des Frachtnetzes im Lade- bzw. Frachtraum vorzusehen, wie dies in der eingangs diskutierten WO 03/024792 A1 erforderlich ist.

Vielmehr kann für die als Stückgut vorliegende Fracht unter Ausnutzung der im Flugzeug ohnehin vorhandenen Befestigungselemente, beispielsweise der frachtraumseitig ausgebildeten Tie-down-Punkte und Netzbefestigungspunkte, an denen gegebenenfalls die Adapter befestigt werden, um zusätzliche Befestigungspunkte zu schaffen, eine ausreichende Sicherung der Fracht bzw. Ladung erzielt werden.

Dadurch können die Adapter relativ klein gehalten werden und müssen nicht für eine umlaufende Befestigung des Netzes im Frachtraum als umlaufende Rahmenstruktur ausgebildet werden.

Darüber hinaus kann durch die Aufteilung der einem adapterseitig ausgebildeten Befestigungspunkt eingeprägten Last auf zwei oder mehrere frachtraumseitige Befestigungspunkte die maximal durch das Netz aufnehmbare und ableitbare Gesamtlast erhöht werden. Durch die Anordnung des Adapters im Kraftweg zwischen den netzseitigen Befestigungspunkten und den frachtraumseitigen Befestigungspunkten ist hierbei ein kontrollierter, vorhersagbarer Eintrag der durch das Netz auf den Adapter aufgebrachten Kraft in die frachtraumseitigen Befestigungspunkte gewährleistet.

Durch die erfindungsgemäße Anordnung des Netzes in einer Ebene identisch zur Ebene der adapterseitigen Befestigungspunkte unabhängig von der auf das Netz aufgebrachten Last, sowie aufgrund dessen, daß sich das Netz in der gleichen Ebene wie die adapterseitigen Befestigungspunkte befindet, so lange keine Last auf das Netz aufgebracht wird, kann im entsprechenden Lastfall zudem in vorteilhafter Weise ein gleichförmige Verformung des Netzes in Richtung des durch das Stückgut auf das Netz eingebrachten Kraftvektors erreicht werden.

Dies führt beispielsweise bei einem symmetrischen Lastfall mit einer weitestgehend symmetrischen Verschiebung des lose aufeinander gestapelten Gepäcks bzw. Stückguts nach Vorne, wie es z.B. bei einem heftigen Aufsetzen und Abbremsen des Flugzeugs auf der Landebahn z.B. der Fall sein könnte, dazu, daß ein unkontrolliertes "Ausbeulen" des Netzes aufgrund von Gepäckstücken an irgendeiner Stelle vermieden und somit ein ungleichmäßiger Krafteintrag auf einen oder mehrere frachtraumseitige Befestigungspunkte verhindert wird. Statt dessen verformt sich das Netz weitestgehend gleichmäßig aus seiner Ruhelage in Flugzeuglängsrichtung nach Vorne, und die auf das Netz wirkende Kraft wird dadurch gleichmäßig, teilweise über die Adapter, in alle genutzten frachtraumseitigen Befestigungspunkte abgeleitet. Eine Überlastung einzelner frachtraumseitiger Befestigungspunkte oder gar der dahinterliegenden Flugzeugstruktur ist somit zuverlässig vermieden.

Mittels des Adapters lassen sich dabei in vorteilhafter Weise auch an Stellen, an denen konstruktionsbedingt keine, oder nicht ausreichend viele frachtraumseitige Befestigungspunkte vorgesehen sind, die zur Befestigung des Netzes dienen könnten, zusätzliche Befestigungspunkte bereitstellen, die in Kombination mit den frachtraumseitigen Befestigungspunkten eine umlaufende Befestigung des Netzes im Frachtraum ermöglichen, ohne daß hierfür ein besonders ausgebildetes Netz verwendet werden müsste.

Vielmehr kann durch die Bereitstellung der adapterseitigen Befestigungspunkte auch an Stellen, an denen normalerweise kein Befestigungspunkt im Frachtraum vorgesehen ist, ein zusätzlicher Befestigungspunkt für das Netz vorgesehen werden, wodurch das Netz in vorteilhafter Weise über den gesamten Umfang des Frachtraums gesichert werden kann.

Zusätzlich ist es mit dem Adapter erstmals möglich, die im Lastfall bei einer unerwünschten Verschiebung der als lose gestapeltes Stückgut vorliegenden Fracht erzeugte Last zuverlässig abzuleiten, unter Ausnutzung der im Flugzeug ohnehin vorhandenen Befestigungselemente, beispielsweise der frachtraumseitig ausgebildeten Tie-down-Punkte und Netzbefestigungspunkte, an denen der oder gegebenenfalls die Adapter befestigt werden, um zusätzliche Befestigungspunkte zu schaffen. Damit wird letztlich eine ausreichende Sicherung der Ladung erreicht.

Zudem ist es vermittels des Adapters möglich, anstelle von teuren Spezialnetzen herkömmliche, standardisierte Netze zur Sicherung der Fracht zu verwenden.

Insbesondere kann hier aufgrund des Adapters, ein modularer Aufbau im Frachtraum realisiert werden, mittels welchem unabhängig vom jeweiligen Flugzeugtyp eine umlaufende Befestigung des Frachtnetzes mittels konstruktiv relativ einfacher und kostengünstiger Mittel gewährleistet werden kann.

Darüber hinaus kann durch die Auf- bzw. Verteilung der Last von einem adapterseitig ausgebildeten Befestigungspunkt auf zwei oder mehrere frachtraumseitige Befestigungspunkte die maximal durch das Netz aufnehmbare und ableitbare Gesamtlast erhöht werden, wobei die Anordnung des Adapters im Kraftweg zwischen den netzseitigen Befestigungspunkten und den frachtraumseitigen Befestigungspunkten zu einem kontrollierten Eintrag der durch das Netz auf den Adapter aufgebrachten Kraft in die frachtraumseitigen Befestigungspunkte führt.

Hiermit wird zudem zuverlässig eine Überlastung der im Flugzeug konstruktionsbedingt vorgesehenen Befestigungspunkte durch Eintrag einer zu hohen Last in einzelne Punkte vermieden.

Darüber hinaus ist es mittels des Adapters möglich, den Frachtraum unabhängig von vorhandenen frachtraumseitigen Befestigungspunkten durch die Bereitstellung adapterseitig ausgebildeter Befestigungspunkte in eine Mehrzahl von Sektionen aufzuteilen, die einzeln durch Netze voneinander abgetrennt sind.

Durch diese Aufteilung des Frachtraums in einzelne Sektoren ist es vorteilhaft möglich, die als loses Stückgut vorliegende Ladung auf die Mehrzahl von Netzen in den Sektoren zu verteilen, wodurch die im Lastfall jeweils von der Ladung auf ein Netz aufgebrachte Last verringert und die Sicherheit somit erhöht werden kann.

Vorteilhafte Weiterbildungen sowie weitere Aspekte der Erfindung ergeben sich ferner aus den Merkmalen der Unteransprüche.

So kann der Adapter der erfindungsgemäßen Netzanordnung als ein sich in Breitenrichtung des Frachtraumes erstreckender, quer verlaufender Stab ausgebildet sein, um eine Anzahl von Gurtelementen des Netzes aufzunehmen. Der Stab kann dabei entlang einer Anzahl von, vorzugsweise an der Decke des Frachtraums ausgebildeten, frachtraumseitigen Befestigungspunkten angeordnet sein, und in zumindest eine Richtung in zumindest einem frachtraumseitigen Befestigungspunkt gesichert sein, wobei der Stab ferner Verbindungsglieder zum Verbinden des quer verlaufenden Stabes mit weiteren frachtraumseitigen Befestigungspunkten aufweist. Ferner ist der Stab geeignet, auf diesen aufgebrachte Kräfte auf frachtraumseitig angeordnete Befestigungspunkte zu verteilen.

Mittels des Adapters kann hierbei in vorteilhafter Weise eine Mehrzahl von adapterseitigen Befestigungspunkten bereitgestellt werden, die in einer Linie entlang der Breite des Frachtraums verlaufen.

Darüber hinaus ist es durch die Ausbildung des Adapters möglich, die auf diesen durch das Gepäcknetz aufgebrachten Kräfte gezielt in frachtraumseitige Befestigungspunkte abzuleiten.

So können hierbei insbesondere durch die Befestigung und Sicherung des Adapters in eine Richtung an zumindest einem Befestigungspunkt die auf den Adapter aufgebrachten Kräfte zunächst in diesen Befestigungspunkt abgeleitet werden.

Mit zunehmender auf den Adapter wirkender Kraft kann diese dann über die zusätzlich adapterseitig ausgebildeten Verbindungsglieder in weitere frachtraumseitige Befestigungspunkte abgeleitet werden, um dadurch die insgesamt vom Adapter aufnehmbare und übertragbare Kraft zu erhöhen, wobei gleichzeitig ein gleichmäßiger Krafteintrag in die Stützstruktur des Frachtraums, d.h. des Flugzeugs, möglich ist.

Nach einem anderen Aspekt der vorliegenden Erfindung ist der Stab geeignet, eine auf diesen aufgebrachte erste Kraft in den zumindest einen frachtraumseitigen Befestigungspunkt einzuleiten, in welchem der Stab gesichert ist, und daß der Stab ferner geeignet ist, eine auf diesen aufgebrachte zweite Kraft durch eine kontrollierte Verformung des Stabes auf weitere frachtraumseitige Befestigungspunkte zu verteilen.

Wie vorstehend erläutert ist es mittels des Adapters möglich, eine durch das Netz auf diesen aufgebrachte Last zunächst in zumindest einen frachtraumseitigen Befestigungspunkt abzuleiten, an welchem der Adapter gesichert ist.

Durch die kontrollierte Verformung des Adapters kann dabei in vorteilhafter Weise sichergestellt werden, daß eine Überlastung des Adapters oder des frachtraumseitigen Befestigungspunktes bei Überschreiten einer bestimmten Grenzlast, beispielsweise der maximal von dem frachtraumseitigen Befestigungspunkt, in welchem der Adapter gesichert ist, aufnehmbaren Last, vermieden wird, da die auf den Adapter wirkende Last durch die Verformung auf weitere Befestigungspunkte verteilt wird.

Gemäß einem weiteren Aspekt der vorliegenden Erfindung ist der Adapter derart ausgebildet, daß die Verbindungsglieder des Stabes ab einem bestimmten Verformungsgrad des Stabes in Berührung mit weiteren frachtraumseitigen Befestigungspunkten kommen.

Die kontrollierte Verformung des Adapters führt dazu, daß die an diesem ausgebildeten Verbindungselemente mit weiteren frachtraumseitigen Befestigungspunkten in Kontakt gelangen, wodurch die vom Netz auf den Adapter übertragene Kraft auf eine Mehrzahl von frachtraumseitigen Befestigungspunkten übertragen werden kann, und wodurch gleichzeitig ein gleichmäßiger Krafteintrag in die Stützstruktur des Frachtraums, d.h. des Flugzeugs, möglich ist.

Ferner kann in vorteilhafter Weise nicht nur ein gleichmäßiger Krafteintrag der vom Netz aufgebrachten Kraft gewährleistet werden, sondern gleichzeitig die maximal in die Stützstruktur ableitbare bzw. übertragbare Kraft erhöht werden.

Beispielsweise ist es denkbar, daß der Adapter zunächst an zwei frachtraumseitigen Befestigungspunkten angebracht ist, die jeweils eine maximale Last von 5 kN aufnehmen können.

Diese Last wird von den frachtraumseitigen Befestigungspunkten jeweils in die Tragstruktur des Frachtraums abgeleitet, wobei die Krafteinleitung in die Tragstruktur des Frachtraums hinein dabei in Abhängigkeit von der Wirkrichtung der vom Netz auf die Befestigungspunkte aufgebrachten Last in x-, y- und z-Richtung erfolgt.

Bei überschreiten dieser Last unterliegt der Adapter einer kontrollierten Verformung, wodurch die zusätzlich am Adapter ausgebildeten Verbindungselemente mit weiteren frachtraumseitigen Befestigungspunkten in Kontakt kommen, und die dadurch maximal übertragbare Last dadurch um die von den jeweiligen zusätzlichen frachtraumseitigen Befestigungspunkten aufnehmbare und übertragbare Last erhöht wird.

Nach einem anderen Aspekt der Erfindung ist jedes Verbindungsglied im Wesentlichen zungenförmig ausgebildet und weist eine Öffnung auf.

Hierbei kann die Öffnung in vorteilhafter Weise so ausgebildet sein, daß diese im Wesentlichen als Rechteck mit abgerundeten Ecken oder oval ausgebildet ist, und genug Spiel lässt, daß eine kontrollierte Verformung des Adapters möglich ist:

Mittels der jeweiligen im Verbindungsglied ausgebildeten Öffnung ist es vorteilhaft möglich, die Verformung des Adapters zu kontrollieren, da die einzelnen Verbindungsglieder zu unterschiedlichen Zeitpunkten mit entsprechenden frachtraumseitig ausgebildeten Befestigungspunkten in Kontakt gelangen.

Alternativ kann das Verbindungsglied auch im Wesentlichen rechteckig ausgebildet sein und an Stelle der Öffnung einen Haken oder dergleichen aufweisen, solange mittels des Verbindungsgliedes eine Befestigung des Adapters an zusätzlichen frachtraumseitigen Befestigungspunkten im Bedarfsfall erzielt werden kann.

Gemäß einem weiteren Aspekt der vorliegenden Erfindung erstreckt sich die Öffnung in Frachtraumlängsrichtung oder Frachtraumbreitenrichtung und kommt je nach Verformungsgrad des Stabes mit dem frachtraumseitigen Befestigungspunkt in Berührung.

Aufgrund der Ausbildung der Öffnung der jeweiligen Verbindungsglieder ist es dabei vorteilhaft möglich, eine durch die vom Netz auf den Adapter übertragenen Last verursachte Verschiebung in x-, y- und z-Richtung zu begrenzen.

Hierdurch können durch eine derartige Verschiebung zusätzlich verursachte Kräfte in x-, y- und/oder z-Richtung vermieden werden und die auf den Adapter wirkende Kraft kann gleichmäßig in die Tragstruktur des Frachtraums abgeleitet werden.

Nach einem anderen Aspekt der vorliegenden Erfindung ist der Adapter im Wesentlichen brückenförmig ausgebildet und verbindet zumindest zwei frachtraumseitige Befestigungspunkte. Ferner stellt der Adapter zumindest einen adapterseitigen Befestigungspunkt zwischen den beiden frachtraumseitigen Befestigungspunkten bereit.

Gemäß dieser Ausführungsform des Adapters kann hierbei ein zusätzlicher Befestigungspunkt zur Aufnahme eines netzseitig ausgebildeten Befestigungspunktes an einer Stelle im Frachtraum bereitgestellt werden, an der normalerweise kein frachtraumseitiger Befestigungspunkt verfügbar ist.

Üblicherweise sind die frachtraumseitig ausgebildeten Befestigungspunkte an Stellen vorgesehen, an denen die Tragstruktur eine Einleitung von Kraft zulässt. Bei Flugzeugen, beispielsweise, ist dies üblicherweise an den Stellen am Rumpf der Fall, an denen sich entweder die gebogenen Spanten oder zumindest die in Längsrichtung verlaufenden Stringern befinden, welche die tragende Struktur des Flugzeugrumpfes bilden.

Durch die Schaffung eines adapterseitigen Befestigungspunktes zwischen zwei frachtraumseitigen Befestigungspunkten kann somit die in die Stützstruktur einleitbare Kraft erhöht werden, da die auf den Adapter wirkende Kraft auf zumindest zwei frachtraumseitigen Befestigungspunkte verteilt wird.

Gemäß einem weiteren Aspekt der Erfindung erstreckt sich der Adapter in Breitenrichtung des Frachtraumes.

Durch die brückenförmige, sich in Breitenrichtung des Frachtraumes erstreckende Ausbildung des Adapters kann hierbei in vorteilhafter Weise ein Befestigungspunkt zur Aufnahme von netzseitig ausgebildeten Befestigungspunkten auch an Stellen bereitgestellt werden, an denen es schwierig ist, frachtraumseitig einen Befestigungspunkt auszubilden. Dies ist beispielsweise in Eckbereichen der Wandung des Frachtraums oder in Bereichen mit hohem Krümmungsradius der Fall.

Nach einem anderen Aspekt der Erfindung ist der Adapter als sich in Längsrichtung des Frachtraumes erstreckendes, längs verlaufendes Befestigungselement ausgebildet ist, wobei das Befestigungselement an zumindest zwei frachtraumseitigen Befestigungspunkten angebracht ist, welche entlang einer Frachtraumlängslinie verlaufen, wobei das Befestigungselement zumindest einen adapterseitigen Befestigungspunkt bereitstellt. Zudem verteilt das Befestigungselement auf selbiges aufgebrachte Kräfte bzw. Lasten in Längsrichtung auf die frachtraumseitigen Befestigungspunkte, an denen das Befestigungselement angebracht ist.

Mittels des Adapters ist es hierbei möglich, zusätzliche Befestigungspunkte zur Aufnahme der netzseitig ausgebildeten Befestigungspunkte bereitzustellen.

Zudem ist es in vorteilhafter Weise möglich, die vom Netz auf den Adapter übertragene Kraft in ihre x-, y-, und z-Komponenten aufzuteilen, welche dann in die frachtraumseitigen Befestigungspunkte eingeleitet werden können. Hierdurch kann ebenfalls die maximal aufnehmbare und in die frachtraumseitigen Befestigungspunkte ableitbare Kraft erhöht werden.

Gemäß einem weiteren Aspekt der vorliegenden Erfindung kann das längs verlaufende Befestigungselement zumindest einen adapterseitigen Befestigungspunkt zwischen den frachtraumseitigen Befestigungspunkten, an denen das Befestigungselement angebracht ist, bereitstellen, und/oder einen adapterseitigen Befestigungspunkt an einem Ende des längs verlaufenden Befestigungselements bereitstellen.

Durch den Adapter können hierbei in vorteilhafter Weise ein oder mehrere zusätzliche Befestigungspunkte im Frachtraum zur Aufnahme von netzseitigen Befestigungspunkten bereitgestellt werden, wobei gleichzeitig die in die frachtraumseitigen Befestigungspunkte übertragbare bzw. einleitbare Kraft erhöht werden kann.

Hierbei ist es zudem ferner möglich, an einer Stelle, an der zwei Netze angebracht werden müssen, beispielsweise um die Türe zum Frachtraum freizuhalten, durch Ausbilden entsprechender adapterseitiger Befestigungspunkte die Befestigung dieser beiden Netze zu gewährleisten, wobei auch in diesem Fall die durch den Adapter in die frachtraumseitigen Befestigungspunkte übertragbare Kraft erhöht werden kann.

Das längs verlaufende Befestigungselement ist dabei zudem vorzugsweise entweder als zugfestes, biegeschlaffes Befestigungselement, beispielsweise in Form eines Gurtes, oder als zugfestes, biegesteifes Befestigungselement, beispielsweise in Form eines Stabes, ausgebildet, abhängig von der Position des adapterseitig ausgebildeten Befestigungspunktes.

Nach einem weiteren Aspekt der Erfindung ist der Adapter als längs verlaufender Druckstab mit zumindest einem vorgespannten Federelement zum gesteuerten Verteilen von Kräften ausgebildet, wobei der Druckstab in Längsrichtung des Frachtraums verläuft, und an zumindest zwei Befestigungspunkten angebracht ist, welche entlang einer Längslinie im Frachtraum verlaufen.

Der Druckstab stellt ferner zumindest einen adapterseitigen Befestigungspunkt bereit, wobei der Druckstab auf diesen vom Netz über den adapterseitig ausgebildeten Befestigungspunkt aufgebrachte Kräfte vermittels des zumindest einem vorgespannten Federelement in Längsrichtung entlang des Adapters verteilt.

Der Druckstab verteilt die auf selbigen aufgebrachten Kräfte schließlich in die frachtraumseitigen Befestigungspunkte, an denen der Druckstab angebracht ist, falls eine auf den Druckstab aufgebrachte Kraft einen Vorspanngrenzwert des im Druckstab angeordneten Federelements übersteigt.

Hierbei ist es in vorteilhafter Weise möglich, daß der Druckstab so angeordnet ist, daß er sich vom Netz weg in Richtung der vom Netz auf den Adapter aufgebrachten Last erstreckt, und dabei die auf den Adapter aufgebrachte Last durch das Federelement aufnimmt. Dadurch kann die maximal aufnehmbare und in die Tragstruktur einleitbare Last erhöht werden.

Alternativ ist es auch denkbar, daß der Druckstab als Zugstab ausgebildet ist, der sich vom Netz weg in Richtung entgegen der vom Stückgut auf das Netz übertragenen Last in Flugzeuglängsrichtung erstreckt.

Hierzu ist beispielsweise ein Sperr- oder Arretierelement im Gehäuse des Stabes vorgesehen, das bei Überschreiten der von der Feder aufnehmbaren Kraft ein weiteres Dehnen der Feder verhindert und die Kraft stattdessen direkt in die frachtraumseitigen Befestigungspunkte weiterleitet.

Durch die alternative Ausführung als Zugstab wirkt die auf den Adapter übertragene Last zunächst nur auf den frachtraumseitig verfügbaren Befestigungspunkt, der am nächsten am Netz angeordnet ist, und wird, sobald die Zugkraft der Feder überschritten wird und das Sperrelement greift, in weitere frachtraumseitige Befestigungspunkte abgeleitet.

Gemäß einem weiteren Aspekt der vorliegenden Erfindung stellt der Druckstab ferner zumindest einen adapterseitigen Befestigungspunkt zwischen den frachtraumseitigen Befestigungspunkten, an denen der Druckstab bereitgestellt ist, bereit, und/oder stellt einen adapterseitigen Befestigungspunkt an einem Ende des Druckstabes bereit.

Durch den Adapter können hierbei in vorteilhafter Weise ein oder mehrere zusätzliche Befestigungspunkte im Frachtraum zur Aufnahme von netzseitigen Befestigungspunkten bereitgestellt werden, wobei aufgrund der Wirkung des Adapters als Druckstab oder Zugstab die in die frachtraumseitigen Befestigungspunkte einleitbare Kraft erhöht werden kann.

Die vorstehend beschriebene Erfindung wird nachfolgend anhand einer beispielhaften Ausführungsform unter Bezugnahme auf die Zeichnungen näher erläutert. Dabei zeigt:
- Fig. 1: eine schematische Darstellung einer beispielhaften Ausführungsform einer erfindungsgemäßen Netzanordnung in einem Frachtraum;
- Fig. 2: eine Darstellung eines Adapters gemäß einer beispielhaften Ausführungsform der vorliegenden Erfindung;
- Fig. 3: eine Darstellung eines Adapters gemäß einer anderen beispielhaften Ausführungsform der vorliegenden Erfindung;
- Fig. 4: eine Darstellung eines Adapters gemäß einer weiteren beispielhaften Ausführungsform der vorliegenden Erfindung;
- Fig. 5: eine Darstellung eines Adapters gemäß einer anderen beispielhaften Ausführungsform der vorliegenden Erfindung;
- Fig. 6A bis 6D: Detailansichten einer weiteren beispielhaften Ausführungsform einer erfindungsgemäßen Netzanordnung;
- Fig. 7A bis 7C: Detailansichten einer weiteren beispielhaften Ausführungsform einer erfindungsgemäßen Netzanordnung; und
- Fig. 8: eine schematische Darstellung einer weiteren beispielhaften Netzanordnung in einem Flugzeugladeraum.

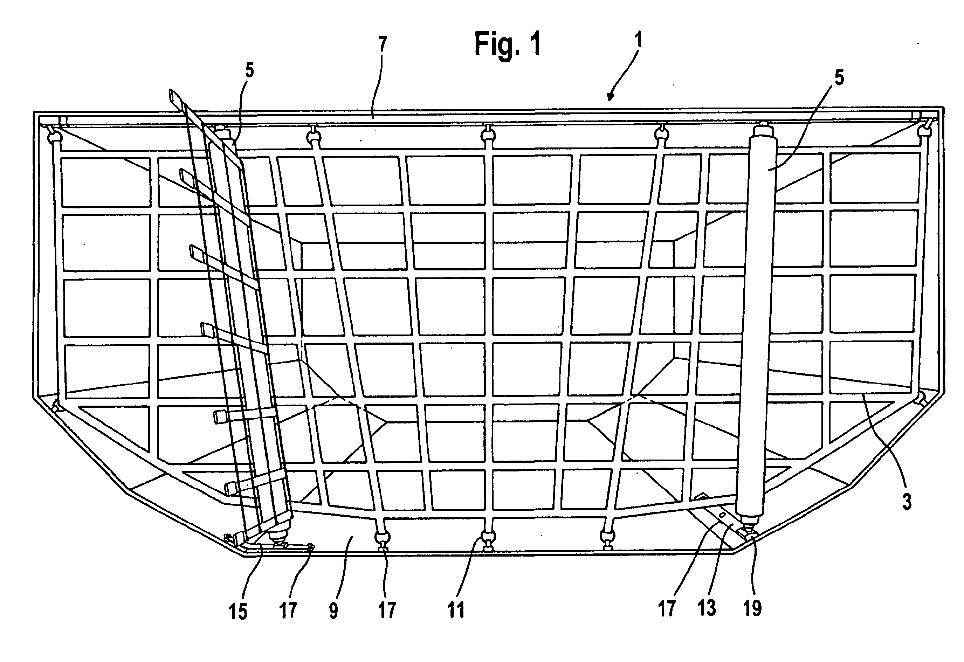

Fig. 1 zeigt eine schematische Darstellung einer beispielhaften Ausführungsform einer erfindungsgemäßen Netzanordnung 1 in einem Frachtraum 9, vorzugsweise in einem Flugzeug.

Hierbei ist ein erstes Gepäck- bzw. Frachtnetz 3 in einem Frachtraum 9 derart angeordnet, daß es sich über die Breite des Frachtraums 9 erstreckt. Das Netz ist mit randseitigen Befestigungspunkten 11 ausgebildet, die in frachtraumseitige Befestigungspunkte 17 eingebracht werden.

Die Netzanordnung 1 sieht ferner mindestens einen Adapter 7, 13, 15 oder 21 zur Befestigung des Netzes im Frachtraum 9 vor, der an wenigstens zwei frachtraumseitigen Befestigungspunkten 17 angebracht ist.

Hierbei ist der Adapter beispielsweise in einem Deckenbereich des Frachtraums 9 als quer verlaufender Stab 7 ausgebildet. Dieser Stab 7 stellt eine Mehrzahl von adapterseitigen Befestigungspunkten 19 zur Verfügung, an welche die am Netzrand ausgebildeten Befestigungspunkte 11 angebracht werden können.

Im Bodenbereich des Frachtraums 9 ist ferner ein brückenförmig ausgebildeter Adapter 15 bereitgestellt, der sich in Breitenrichtung des Frachtraums 9 erstreckt. Dieser Adapter 15 stellt seinerseits einen adapterseitigen Befestigungspunkt 19 bereit, in welchen ein netzseitig ausgebildeter Befestigungspunkt 11 eingebracht werden kann.

Gemäß der beispielhaften Ausführungsform der erfindungsgemäßen Netzanordnung 1 ist in diesem brückenförmig ausgebildeten Adapter 15 ein zweites Netz befestigt, um Stückgut vom Bereich einer Frachtraumtüre fernzuhalten, und somit die Frachtraumtüre freizuhalten.

Im Bodenbereich des Frachtraums 9 ist zudem gemäß der beispielhaften Netzanordnung 1 ein weiterer, sich in Längsrichtung des Frachtraums 9 erstreckender Adapter 13 angeordnet. Dieser Adapter 13 stellt seinerseits einen adapterseitigen Befestigungspunkt 19 bereit, in welchen ein netzseitig ausgebildeter Befestigungspunkt 11 eingebracht werden kann.

Gemäß der beispielhaften Ausführungsform der erfindungsgemäßen Netzanordnung 1 ist in diesem Adapter 13 ein im Wesentlichen senkrecht verlaufender Stab 5 befestigt.

An diesem Stab 5 können zusätzliche, im Wesentlichen senkrecht verlaufende, Befestigungspunkte ausgebildet sein (nicht dargestellt), an denen das Netz 3 oder auch ein weiteres Netz befestigt wird, wie dies exemplarisch an einem zweiten Stab 5 dargestellt ist, der am Adapter 15 sowie am Adapter 7 angeordnet ist. Der Stab 5 ist dabei beispielsweise derart ausgebildet, daß er Kräfte in x- und y-Richtung aufnehmen kann, und sich bei einer in z-Richtung wirkenden Kraft bis zu einem bestimmten Maß teleskopähnlich verformt.

Wie aus Fig. 1 ersichtlich ist, sind die Befestigungspunkte 11 für das Netz 3 unabhängig von der auf das Netz 3 aufgebrachten Last in einer Ebene identisch zur Ebene der adapterseitigen Befestigungspunkte 19 angeordnet. Ferner befindet sich das Netz 3 in der gleichen Ebene wie die adapterseitigen Befestigungspunkte 19, so lange keine Last auf das Netz 3 aufgebracht wird.

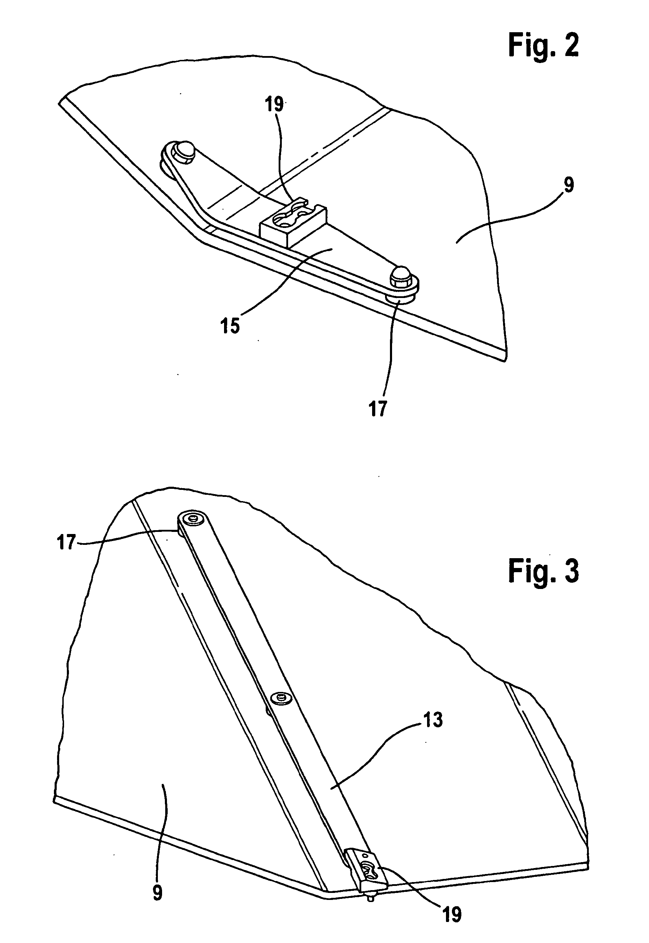

Fig. 2 zeigt ferner eine Darstellung eines Adapters 15 gemäß einer beispielhaften Ausführungsform der vorliegenden Erfindung.

Wie aus Fig. 2 ersichtlich ist, ist der Adapter 15 brückenförmig ausgebildet und verbindet zwei in Breitenrichtung des Frachtraums 9 ausgebildete, frachtraumseitige Befestigungspunkte 17.

Ferner stellt der Adapter 15 eine zwischen den frachtraumseitigen Befestigungspunkten 17 gelegenen adapterseitigen Befestigungspunkt 19 bereit, in welchen die netzseitig ausgebildeten Befestigungspunkte eingebracht werden können.

Durch die brückenförmige Ausbildung des Adapters 15 mit Bereitstellung des adapterseitigen Befestigungspunktes 19 ist es möglich, einen zur Befestigung des Netzes benötigten Befestigungspunkt, d.h. den adapterseitigen Befestigungspunkt 19, an einer Stelle bereitzustellen, an der ursprünglich kein Befestigungspunkt im Frachtraum vorgesehen war.

Gleichzeitig kann die maximal in die Flugzeugstützstruktur über die frachtraumseitigen Befestigungspunkte 17 einleitbare Kraft signifikant erhöht werden, da die auf den adapterseitig ausgebildeten Befestigungspunkt 19 wirkende Kraft in zwei frachtraumseitig ausgebildete Befestigungspunkte 17 eingebracht werden kann.

Mittels des in Fig. 2 dargestellten Adapters 15, der eine Ausführungsform des Adapters der vorliegenden Erfindung zeigt, ist es hierbei ferner möglich, einen Befestigungspunkt 19 zur Aufnahme von netzseitig ausgebildeten Befestigungspunkten auch an Stellen im Frachtraum 9 bereitzustellen, an denen es schwierig, wenn nicht unmöglich, ist, einen frachtraumseitigen Befestigungspunkt bereitzustellen. Dies ist beispielsweise in Eckbereichen der Wandung des Frachtraums 9 oder in Bereichen mit hohem Krümmungsradius der Fall.

Fig. 3 zeigt Darstellung eines Adapters 13 gemäß einer anderen beispielhaften Ausführungsform der vorliegenden Erfindung.

Der in Fig. 3 dargestellte Adapter 13 verläuft dabei im allgemeinen in Längsrichtung des Frachtraums 9 und ist an zumindest zwei frachtraumseitig ausgebildeten Befestigungspunkten 17 angebracht und stellt einen adapterseitigen Befestigungspunkt 19 bereit.

Bei der in Fig. 3 exemplarisch dargestellten Ausführungsform ist der Adapter 13 an drei frachtraumseitigen Befestigungspunkten 17 angebracht und stellt an einer Endseite des Adapters 13 einen adapterseitigen Befestigungspunkt 19 bereit.

Alternativ kann der Adapter 13 auch an nur zwei oder auch mehr als drei frachtraumseitigen Befestigungspunkten 17 angeordnet sein, und einen oder mehrere alternative oder zusätzliche adapterseitige Befestigungspunkte 19 zwischen den frachtraumseitigen Befestigungspunkten bereitstellen.

Bei dem in Fig. 3 dargestellten Adapter 13 wird die über den adapterseitig ausgebildeten Befestigungspunkt 19 in den Adapter 13 eingebrachte Kraft in die drei frachtraumseitig ausgebildeten Befestigungspunkte 17 eingeleitet, an denen der Adapter 13 befestigt ist. Hierbei wird die Kraft in ihre Komponenten in x-, y- und z-Richtung zerlegt.

Die vom Netz oder dem Stab in den an der Endseite des in Fig. 3 dargestellten Adapters 13 ausgebildeten adapterseitigen Befestigungspunkt 19 eingebrachte Kraft wird dabei zunächst an der Stelle des adapterseitigen Befestigungspunktes 19 in ihre y- und z-Komponenten zerlegt, und diese in Komponenten werden in den frachtraumseitigen Befestigungspunkt 17 abgeleitet, der unter dem adapterseitigen Befestigungspunkt 19 angeordnet ist.

Bei zunehmender, auf den Adapter 13 wirkender Kraft, wird diese zudem weiter in ihre x- und y-Komponenten aufgeteilt, die dann in die zusätzlichen frachtraumseitigen Befestigungspunkte 17 abgeleitet werden, die hinter dem adapterseitigen Befestigungspunkt 19 liegen.

Der Adapter 13 kann bei der in Fig. 3 dargestellten beispielhaften Ausbildungsform, bei welcher der adapterseitige Befestigungspunkt 19 an einer Endseite vorgesehen ist, entweder als zugfestes, biegeschlaffes gurtförmiges Element, oder als zugfestes, biegesteifes Stabelement ausgebildet sein.

Wenn der adapterseitige Befestigungspunkt 19 dagegen zwischen den beiden Endseiten des Adapters 13 vorgesehen ist, wird der Adapter 13 nur als zugfestes, biegesteifes Stabelement ausgebildet.

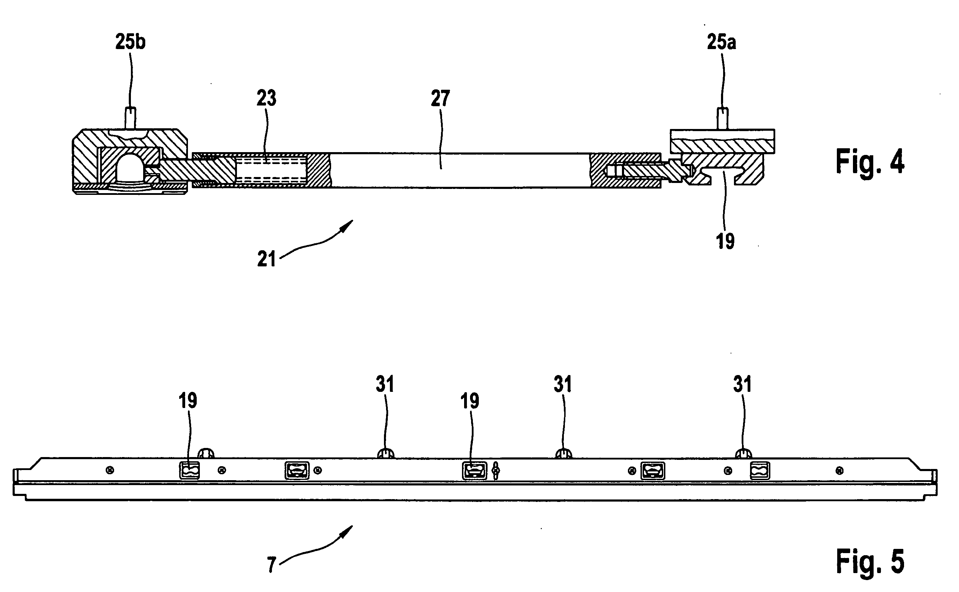

Fig. 4 zeigt eine Darstellung eines Adapters 21 gemäß einer weiteren beispielhaften Ausführungsform der vorliegenden Erfindung.

Der Adapter 21 ist dabei als ein in Längsrichtung des Frachtraums verlaufender Druckstab ausgebildet und weist ein in einem Gehäuse 27 untergebrachtes Federelement 23 auf, das auf eine bestimmte Spannung vorgespannt ist.

Mittels des Adapters 21 werden die auf den an einer Endseite des Adapters 21 ausgebildeten Befestigungspunkt 19 wirkenden Kräfte gezielt in die Tragstruktur des Flugzeugs eingeleitet.

Vorzugsweise ist der Adapter 21 dabei derart ausgebildet, daß sich der Adapter 21 von einem ersten Befestigungspunkt 25a, der in der beispielhaften Ausführungsform dem Befestigungspunkt 19 zur Befestigung des Netzes am Adapter 21 gegenüberliegt, und an einem ersten frachtraumseitigen Befestigungspunkt befestigt ist, zu einem zweiten Befestigungspunkt 25b erstreckt, der vom Netz aus in Längsrichtung nach vorne, also vom Gepäck weg, verläuft.

Hiermit ist es möglich, die auf das Netz und damit auf den Adapter 21 wirkenden Kräfte zu erhöhen, die dann in die frachtraumseitigen Befestigungspunkte abgeleitet werden können.

Alternativ kann sich der Adapter 21 auch vom ersten Befestigungspunkt 25a, der in der beispielhaften Ausführungsform dem Befestigungspunkt 19 zur Befestigung des Netzes am Adapter 21 gegenüberliegt, und an einem ersten frachtraumseitigen Befestigungspunkt befestigt ist, zu einem zweiten Befestigungspunkt 25b erstrecken, der vom Netz aus in Längsrichtung nach hinten, also zum Gepäck hin, verläuft.

Neben den an den jeweiligen Endseiten am Adapter 21 ausbildbaren Befestigungspunkten 19 zur Aufnahme des Netzes ist es alternativ ferner möglich, daß derartige Befestigungspunkte 19 zur Befestigung des Netzes, alternativ oder zusätzlich, zwischen den Befestigungspunkten 25a und 25b entlang des Gehäuses 27 des Adapters 21 vorgesehen werden.

Ferner kann der in Fig. 4 dargestellte Adapter 21 alternativ auch in Breitenrichtung im Frachtraum angeordnet sein, um auf diese Weise beispielsweise einen netzseitig ausgebildeten Befestigungspunkt eines längs im Frachtraum verlaufenden Netzes, das beispielsweise dazu dient, die Frachtraumtüre freizuhalten, aufzunehmen.

Fig. 5 zeigt eine Darstellung eines Adapters 7 gemäß einer anderen beispielhaften Ausführungsform der vorliegenden Erfindung.

Der Adapter 7 ist dabei als ein sich in Breitenrichtung des Frachtraumes erstreckender, quer verlaufender Stab ausgebildet und weist eine entlang des Adapters 7 verlaufende Mehrzahl von adapterseitig ausgebildeten Befestigungspunkten 19 auf, um darin wiederum eine Mehrzahl von Gurtelementen des Netzes zur Befestigung desselben am Adapter 7 aufzunehmen.

Der Adapter 7 selbst ist an einer Mehrzahl von frachtraumseitigen Befestigungspunkten angebracht und in zumindest eine Richtung in zumindest einem frachtraumseitigen Befestigungspunkt gesichert. Alternativ kann der Adapter 7 auch anstelle der frachtraumseitigen Befestigungspunkte an zusätzlichen, längs im Frachtraum verlaufenden Befestigungselementen, beispielsweise dem längs verlaufenden Adapter 13, angelenkt sein, wobei der längs verlaufende Adapter 13 alternativ auch an der Frachtraumdecke angeordnet sein kann. Derlei zusätzliche Befestigungselemente können dabei ihrerseits an zwei oder mehreren frachtraumseitigen Befestigungspunkten angeordnet sein, wodurch die auf den Adapter 7 wirkende Kraft auf mehrere frachtraumseitige Befestigungspunkte verteilt werden kann, sei es am Boden oder an der Decke.

Bei der in Fig. 5 dargestellten Ausführungsform ist der Adapter 5 an den beiden Endseiten an der Frachtraumdecke befestigt (siehe hierzu auch Fig. 1), und weist zudem eine Mehrzahl weiterer Verbindungsglieder 31 auf, die ihrerseits mit frachtraumseitig ausgebildeten Befestigungspunkten in Verbindung stehen.

Wie in Fig. 5 schematisch dargestellt ist, ist jedes am Adapter 7 ausgebildete Verbindungsglied 31 im Wesentlichen zungenförmig ausgebildet und weist eine Öffnung auf, die ab einem bestimmten Verformungsgrad des Adapters 7 aufgrund der auf diesen einwirkenden Last durch das Netz in Berührung mit weiteren frachtraumseitigen Befestigungspunkten kommen.

Wie in Fig. 1 ferner exemplarisch dargestellt ist, ist es möglich, einen oder mehrere Adapter in unterschiedlichen Kombinationen zur Schaffung einer Netzanordnung zu verwenden, mittels welcher anstelle eines speziellen Gepäcknetzes ein kostengünstiges Standardnetz umlaufend im Frachtraum gesichert werden kann. Hierbei können die einzelnen Adapter wie vorstehend beispielhaft beschrieben angeordnet sein, und somit eine ausreichende Anzahl von Befestigungspunkten zur Aufnahme von netzseitig ausgebildeten Befestigungspunkten bereitstellen.

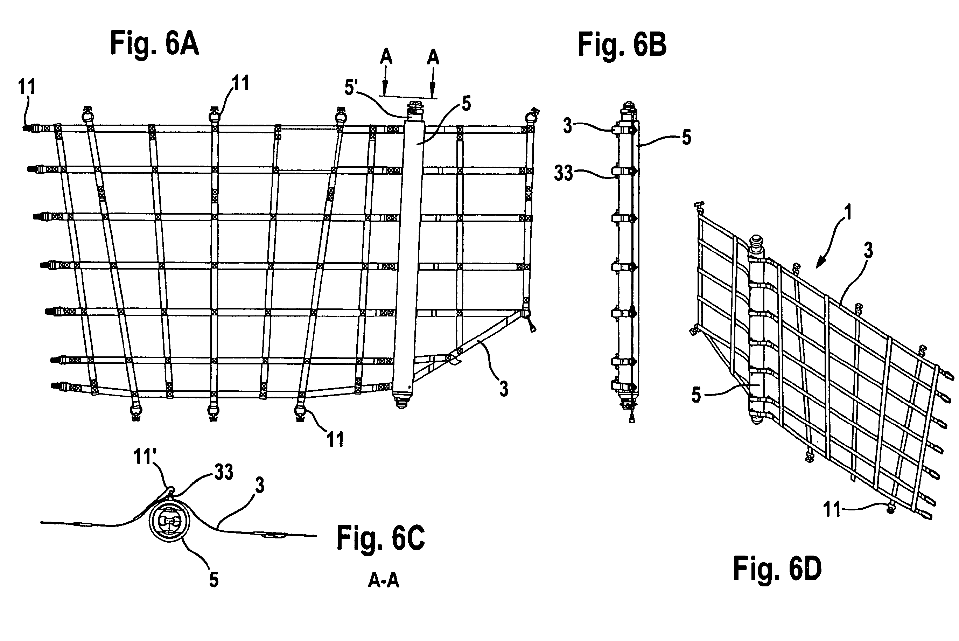

In Fig. 6A bis 6D sind Detailansichten einer beispielhaften Ausführungsform einer Netzanordnung gezeigt.

Hierbei ist das Netz 3 vermittels der am Netzrand ausgebildeten Befestigungspunkte 11 an frachtraumseitigen Befestigungspunkten (nicht dargestellt) angebracht. Zusätzlich ist das Netz 3 ferner am im Wesentlichen senkrecht verlaufenden Stab 5 befestigt.

Wie in Fig. 6A schematisch dargestellt, ist der Stab 5 an seinem oberen Ende 5' derart ausgebildet, daß er sich bei Einwirken einer bestimmten Kraft teleskopartig in Längsrichtung des Stabes verlängern kann.

Wie in Fig. 6B weiter dargestellt ist, kann das Netz zusätzlich zur Befestigung an den (nicht dargestellten) frachtraumseitigen Befestigungspunkten und/oder den (ebenfalls nicht dargestellten) Adaptern umlaufend in am Stab 5 ausgebildeten Befestigungspunkten 33 angeordnet sein, wodurch die Stabilität der Netzanordnung erhöht werden kann.

Fig. 6C zeigt eine Draufsicht auf Punkt A-A in Fig. 6A.

Wie in Fig. 6C beispielhaft dargestellt, weist der Stab 5 an zumindest einer Seite Befestigungspunkte 33 zur Aufnahme von, beispielsweise, netzseitig angeordneten Befestigungspunkten 11' auf. Das Netz 3 wird, wie in Fig. 6C dargestellt, beispielsweise in einem Bogen am Stab 5 entlang geführt oder an diesem tangential angelegt, und ggf. zusätzlich mittels der stabseitigen Befestigungspunkte 5 in Verbindung mit den netzseitig angeordneten Befestigungspunkten 11' am Stab 5 gehalten.

Die stabseitigen Befestigungspunkte 33 können dabei in Form von Schnappverschlüssen, Haken, Ösen oder dergleichen ausgeführt sein, um die netzseitigen Befestigungspunkte 11' aufzunehmen.

Fig. 6D zeigt schließlich eine perspektivische Darstellung der erfindungsgemäßen Netzanordnung 1. Hierbei ist das Netz 3 mittels netzseitiger Befestigungspunkte 11 an (nicht dargestellten) Befestigungspunkten im Frachtraum angelenkt, und wird zudem, wie vorstehend beschrieben, bogenförmig am Stab 5 entlang geführt bzw. daran tangential oder radial angelegt. Das Netz 3 ist dabei, wie vorstehend beschrieben am Stab 5 angeordnet.

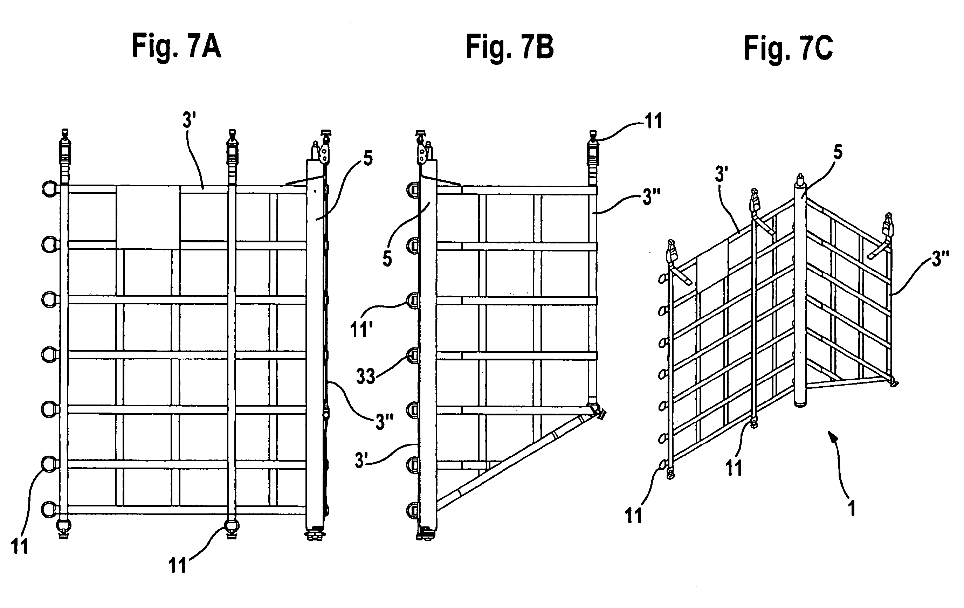

Die Figuren 7A bis 7C zeigen Detailansichten einer anderen beispielhaften Ausführungsform der erfindungsgemäßen Netzanordnung.

Hierbei ist, wie in Fig. 7A dargestellt, ein Netz über Eck an dem Stab 5 angeordnet. Gemäß dieser beispielhaften Ausführungsform ist es dabei möglich, ein einzelnes Netz vermittels des Stabes 5 in einem beliebigen Winkel verlaufend anzuordnen.

Alternativ ist es auch möglich, ein erstes Netz 3' beispielsweise in Frachtraum- Längsrichtung anzuordnen, um somit beispielsweise den Bereich um eine Frachtraumtüre durch das Netz 3' freizuhalten. Zusätzlich ist es möglich, ein zweites Netz 3" in Frachtraum-Querrichtung anzuordnen, mittels welchem dann, z.B. im Notfall unkontrolliert durch den Frachtraum geschleuderte, Fracht, beispielsweise bei einer Notlandung, einer unerwarteten plötzlichen Richtungsänderung des Flugzeugs, bei heftigen Turbulenzen, oder dergleichen zurückgehalten werden kann.

Hierbei können die Netze 3' und 3", wie in Fig. 7A dargestellt, im rechten Winkel zueinander am Stab 5 angebracht sein. Mittels netzseitiger Befestigungspunkte 11 wird das Netz bzw. werden die Netze 3' und 3", wie vorstehend beschrieben, ferner an frachtraumseitigen Befestigungspunkten sowie an durch die Adapter bereitgestellten Befestigungspunkten im Frachtraum angebracht.

Fig. 7B zeigt die in Fig. 7A dargestellte Ansicht der alternativen Ausführungsform der erfindungsgemäßen Netzanordnung in einer um 90° gegen den Uhrzeigersinn gedrehten Ansicht.

Wie in Fig. 7B dargestellt, ist das in dieser beispielhaften Ausführungsform in Frachtraum-Querrichtung verlaufende Netz 3" in einem unteren Bereich schräg zulaufend ausgebildet. Durch diesen an die Kontur des Frachtraums angelehnten Verlauf des Netzes ist es möglich, einen über die gesamte Breite des Frachtraums möglichst gleich bleibenden Abstand der Netzunterkanten und -oberkanten vom Frachtraumboden, der -decke und den -seitenwänden zu realisieren, wodurch ein "durchschlüpfen" von einzelnen Frachtstücken unter dem Netz 3' und 3" hindurch bzw. an diesem vorbei verhindert werden kann.

Wie in Fig. 7B ferner dargestellt, sind die Netze 3' und 3" mittels netzseitiger Befestigungspunkte 11' an Befestigungspunkten 33 befestigt, die am im Wesentlichen senkrecht angeordneten Stab 5 ausgebildet sind. Ferner ist das Netz mittels netzseitiger Befestigungspunkte 11 an frachtraumseitigen Befestigungspunkten (nicht dargestellt) angebracht.

Fig. 7C zeigt zudem eine perspektivische Darstellung der in den Figuren 7A und 7B beschriebenen, weiteren Ausführungsform der erfindungsgemäßen Netzanordnung 1. Hierbei sind das erste Netz 3' und das zweite Netz 3" jeweils mittels netzseitiger Befestigungspunkte 11 an (nicht dargestellten) Befestigungspunkten im Frachtraum angelenkt. Ferner sind die beiden Netze 3' und 3" rechtwinklig zueinander am senkrecht verlaufenden Stab 5 befestigt.

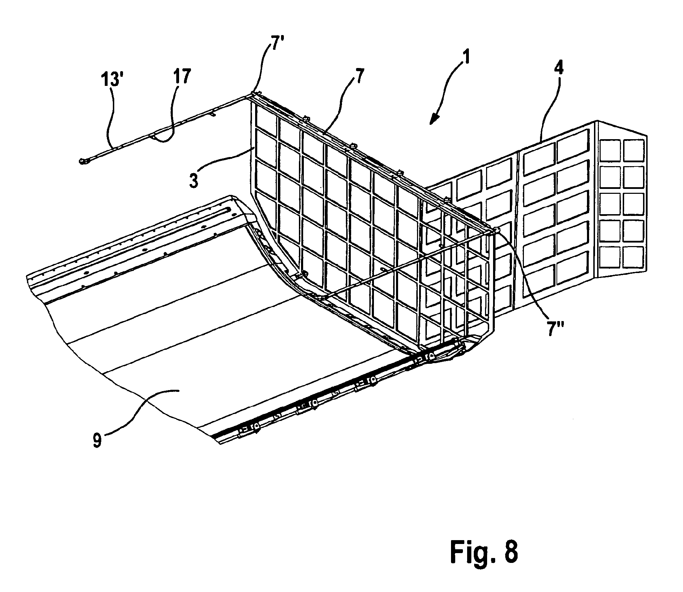

Fig. 8 zeigt schließlich eine schematische Darstellung einer weiteren beispielhaften Netzanordnung 1 in einem Flugzeugfrachtraum 9.

Hierbei ist ein erstes Netz 3 über die Frachtraumbreite angeordnet, und an frachtraumseitigen Befestigungspunkten 17 sowie an einem an der Frachtraumdecke ausgebildeten, quer verlaufenden Adapter 7 befestigt.

Der an der Frachtraumdecke quer verlaufende Adapter 7 ist dabei an seinen Außenseiten 7' und 7" an einem in Frachtraumlängsrichtung verlaufenden Befestigungselement 13' angeordnet, das an z.B. in der Decke vorgesehenen frachtraumseitigen Befestigungspunkten 17 angelenkt ist. Dieses Befestigungselement kann dabei beispielsweise der vorstehend beschriebene Adapter 13 sein, oder kann alternativ ein anderes längs verlaufendes Befestigungselement 13' sein, solange es dazu geeignet ist, die mittels des Adapters 7 vom Netz 3 übertragenen Kräfte aufzunehmen und in die Tragstruktur des Frachtraums 9 abzuleiten.

Wie in Fig. 8 ferner dargestellt, ist ein zweites Netz 4 rechtwinklig zum Netz 3 in Frachtraumlängsrichtung angeordnet, um den Bereich einer (nicht dargestellten) Frachtraumluke frei von Frachtgut zu halten.

Die in Fig. 8 aus den beiden Netzen 3 und 4 bestehende Netzkonstruktion 1 kann alternativ auch aus mehr als zwei Netzen bestehen.

So ist es denkbar, daß ein erstes Netz in Frachtraumquerrichtung bis hin zu dem in Fig. 8 dargestellten Schnittbereich der Netze 3 und 4 verläuft. An diesem Schnittbereich kann sich dann beispielsweise ein vorstehend diskutierter Stab (nicht dargestellt) befinden, an welchem das erste Netz befestigt ist. An diesem Stab kann dann ferner ein zweites Netz angeordnet sein, das in Frachtraumlängsrichtung entlang der Breite der Frachtraumluke bis zu einem weiteren (nicht dargestellte) Stab verläuft. An jedem Stab kann dann zusätzlich ein weiteres Netz angeordnet sein, welches beispielsweise, wie auch in Fig. 7B dargestellt, eine schräg verlaufende Netzunterkannte hat, wodurch eine Anpassung an die Frachtraumkontur erreicht werden kann.

Mittels dieser vier Netze kann bei diesem Beispiel in gleicher Weise eine Sicherung des Frachtguts in Frachtraumlängsrichtung und im Bereich der Frachtraumluke erreicht werden, wie dies bei der vorstehend diskutierten Netzanordnung mit einem oder zwei Netzen der Fall ist.

Darüber hinaus ist es bei der Verwendung von mehr als zwei Netzen möglich, über große Bereiche des Frachtraums, insbesondere in Frachtraumquer- oder -längsrichtung, einfach ausgebildete, standardisierte Netze zu verwenden. Nur in den Randbereichen des Frachtraums müssen dann auf die jeweils vorhandene Rumpfstruktur des Flugzeugs angepasste Netze verwendet werden.

Hierdurch können die Kosten für die Netze reduziert werden und die Netzanordnung kann vereinfacht werden.

Mittels der erfindungsgemäßen Netzkonstruktion unter Verwendung der Adapter kann ferner eine umlaufende Befestigung eines Standard-Gepäcknetzes im Frachtraum, insbesondere in einem Flugzeug, erreicht werden, wobei hierfür kein speziell gefertigtes, teures Netz erforderlich ist, und die durch die frachtraumseitig vorgesehenen Netzbefestigungspunkte und die Tie-down-Punkte vorgegebenen maximalen Lasten von bis zu 5,9 kN Scherlast und 6,8 kN Spannungslast bzw. bis zu 8,9 kN Last in jede Richtung - wie sie beispielsweise von Airbus definiert werden -, welche in den jeweiligen Punkten sicher aufgenommen werden können, durch die Adapter erhöht werden kann, da diese die Last, welche auf sie wirkt, gleichmäßig über eine Mehrzahl von frachtraumseitigen Befestigungspunkte verteilen.

Zudem ist mittels der auf diese Weise erzielbaren Netzanordnung eine gleichmäßige Kraftverteilung und -einbringung in die frachtraumseitigen Befestigungspunkte möglich.

Darüber hinaus lässt sich die mit den Adaptern realisierbare Netzanordnung auf beliebige Flugzeugkonstruktionen übertragen, so lange diese über entsprechende Befestigungspunkte im Frachtraum verfügen, an welchen die Adapter angebracht werden können, ohne daß hierfür teure oder aufwändige Konstruktionen für den jeweiligen Frachtraumtyp zur Verfügung gestellt werden müssen.

Die vorliegende Erfindung betrifft somit eine Netzanordnung 1 für einen Frachtraum 9, vorzugsweise in einem Flugzeug, mit: zumindest einem Netz 3 mit einer Mehrzahl von, randseitig ausgebildeten, Befestigungspunkten 11, und zumindest einem Adapter 7, 13, 15, 21 zur Befestigung des Netzes 3 im Laderaum 9.

Der Adapter 7, 13, 15, 21 ist an zumindest zwei von einer Mehrzahl von frachtraumseitigen Befestigungspunkten 17 anbringbar zur Ableitung einer auf den Adapter 7, 13, 15, 21 aufgebrachten Last in die zumindest zwei frachtraumseitigen Befestigungspunkte 17. Der Adapter 7, 13, 15, 21 ist im Kraftweg zwischen den, vorzugsweise randseitig ausgebildeten, Netzbefestigungspunkten 11 und den frachtraumseitigen Befestigungspunkten 17 angeordnet.

Der Adapter 7, 13, 15, 21 stellt ferner zumindest einen adapterseitigen Befestigungspunkt 19 zum Befestigen des Netzes 3 am Adapter 7, 13, 15, 21 bereit. Die Befestigungspunkte für das Netz sind in einer Ebene identisch zur Ebene der adapterseitigen Befestigungspunkte 19 angeordnet, unabhängig von der auf das Netz aufgebrachten Last. Das Netz befindet sich in der gleichen Ebene, wie die adapterseitigen Befestigungspunkte 19, solange keine Last auf das Netz 3 aufgebracht wird.

## Patentansprüche

1. Netzanordnung (1) für einen Frachtraum (9) in einem Flugzeug, mit:
zumindest einem Netz (3, 3', 3") mit einer Mehrzahl von randseitig am Netz (3, 3', 3") ausgebildeten, umlaufenden Befestigungspunkten (11), und
zumindest einem Adapter (7, 13, 15, 21) zur Befestigung des Netzes (3, 3', 3") im Laderaum (9),
wobei der Adapter (7, 13, 15, 21) an zumindest zwei von einer Mehrzahl von frachtraumseitigen Befestigungspunkten (17) anbringbar ist, zur Ableitung einer auf den Adapter (7, 13, 15, 21) aufgebrachten Last in die zumindest zwei frachtraumseitigen Befestigungspunkte (17),
**dadurch gekennzeichnet, dass**
der Adapter (7, 13, 15, 21) im Kraftweg zwischen den, randseitig ausgebildeten, Netzbefestigungspunkten (11) und den frachtraumseitigen Befestigungspunkten (17) angeordnet ist,
wobei der Adapter (7, 13, 15, 21) zumindest einen adapterseitigen Befestigungspunkt (19) zum Befestigen des Netzes (3, 3', 3") am Adapter (7, 13, 15,21) bereitstellt,
wobei die Befestigungspunkte für das Netz (3, 3', 3") in einer Ebene identisch zur Ebene der adapterseitigen Befestigungspunkte (19) angeordnet sind, unabhängig von der auf das Netz (3, 3', 3") aufgebrachten Last,
wobei sich das Netz (3, 3', 3") in der gleichen Ebene wie die adapterseitigen Befestigungspunkte (19) befindet, so lange keine Last auf das Netz (3, 3', 3") aufgebracht wird, und
wobei das Netz (3, 3', 3") durch eine Kombination von frachtraumseitigen Befestigungspunkten (17) und den zumindest einen adapterseitigen Befestigungspunkt (19) umlaufend in dem Frachtraum (9) befestigt ist.

2. Netzanordnung (1) nach Anspruch 1, **dadurch gekennzeichnet, dass** der Adapter (7, 13, 15, 21) als sich in Breitenrichtung des Frachtraumes (9) erstreckender, quer verlaufender Stab (7) ausgebildet ist, um eine Mehrzahl von Gurtelementen des Netzes (3, 3', 3") aufzunehmen, wobei der Stab (7) entlang einer Mehrzahl von, vorzugsweise an der Decke des Frachtraums (9) ausgebildeten, frachtraumseitigen Befestigungspunkten (17) angeordnet ist, und in zumindest eine Richtung in zumindest einem frachtraumseitigen Befestigungspunkt (17) gesichert ist, wobei
der Stab (7) ferner Verbindungsglieder (31) zum Verbinden des quer verlaufenden Stabes (7) mit weiteren frachtraumseitigen Befestigungspunkten (17) aufweist, und wobei
der Stab (7) geeignet ist, auf den Stab (7) aufgebrachte Kräfte auf frachtraumseitige Befestigungspunkte (17) zu verteilen.

3. Netzanordnung (1) nach Anspruch 2, **dadurch gekennzeichnet, dass** der Stab (7) geeignet ist, eine auf den Stab (7) aufgebrachte erste Kraft in den zumindest einen frachtraumseitigen Befestigungspunkt (17) einzuleiten, in welchem der Stab (7) gesichert ist, und dass der Stab (7) ferner geeignet ist, eine auf diesen aufgebrachte zweite Kraft durch eine kontrollierte Verformung des Stabes (7) auf weitere frachtraumseitige Befestigungspunkte (17) zu verteilen.

4. Netzanordnung (1) nach Anspruch 2 oder 3, **dadurch gekennzeichnet, dass** die Verbindungsglieder (31) ab einem bestimmten Verformungsgrad des Stabes (7) in Berührung mit weiteren frachtraumseitigen Befestigungspunkten (17) kommen.

5. Netzanordnung (1) nach einem der Ansprüche 2 bis 4, **dadurch gekennzeichnet, dass** jedes Verbindungsglied (31) im Wesentlichen zungenförmig ausgebildet ist und eine Öffnung aufweist.

6. Netzanordnung (1) nach Anspruch 5, **dadurch gekennzeichnet, dass** sich die Öffnung in Frachtraumlängsrichtung oder Frachtraumbreitenrichtung erstreckt und je nach Verformungsgrad des Stabes (7) mit dem frachtraumseitigen Befestigungspunkt (17) in Berührung kommt.

7. Netzanordnung (1) nach Anspruch 1, **dadurch gekennzeichnet, dass** der Adapter (15) brückenförmig ausgebildet ist, zumindest zwei frachtraumseitige Befestigungspunkte (17) verbindet, und zumindest einen adapterseitigen Befestigungspunkt (19) zwischen den beiden frachtraumseitigen Befestigungspunkten (17) bereitstellt.

8. Netzanordnung (1) nach Anspruch 7, **dadurch gekennzeichnet, dass** sich der Adapter (15) in Breitenrichtung des Frachtraumes (9) erstreckt.

9. Netzanordnung (1) nach Anspruch 1, **dadurch gekennzeichnet, dass** der Adapter (7, 13, 15, 21) als sich in Längsrichtung des Frachtraumes (9) erstreckendes, längs verlaufendes Befestigungselement (13) ausgebildet ist, wobei
das Befestigungselement (13) an zumindest zwei frachtraumseitigen Befestigungspunkten (17) angebracht ist, welche entlang einer Frachtraumlängslinie verlaufen, wobei
das Befestigungselement (13) zumindest einen adapterseitigen Befestigungspunkt (19) bereitstellt, und wobei
das Befestigungselement (13) auf selbiges aufgebrachte Lasten in Längsrichtung auf die frachtraumseitigen Befestigungspunkte (17), an denen das Befestigungselement (13) angebracht ist, verteilt.

10. Netzanordnung (1) nach Anspruch 9, **dadurch gekennzeichnet, dass** das längs verlaufende Befestigungselement (13) zumindest einen adapterseitigen Befestigungspunkt (19) zwischen den frachtraumseitigen Befestigungspunkten (17), an denen das Befestigungselement (13) angebracht ist, bereitstellt, und/oder einen adapterseitigen Befestigungspunkt (19) an einem Ende des längs verlaufenden Befestigungselements (13) bereitstellt.

11. Netzanordnung (1) nach Anspruch 1, **dadurch gekennzeichnet, dass**
der Adapter (7, 13, 15, 21) als längs verlaufender Druckstab (21) mit zumindest einem vorgespannten Federelement (23) zum gesteuerten Verteilen von Kräften ausgebildet ist, wobei der Druckstab (21) in Längsrichtung des Frachtraums 9) verläuft, wobei
der Druckstab (21) an zumindest zwei Befestigungspunkten (17) angebracht ist, welche entlang einer Längslinie im Frachtraum (9) verlaufen, wobei der Druckstab (21) zumindest einen adapterseitigen Befestigungspunkt (19) bereitstellt, wobei
der Druckstab (21) auf diesen aufgebrachte Kräfte vermittels des vorgespannten Federelements (23) in Längsrichtung verteilt, und wobei
der Druckstab (21) die auf diesen aufgebrachten Kräfte in die frachtraumseitigen Befestigungspunkte (17), an denen der Druckstab (21) angebracht ist, verteilt, falls eine auf den Druckstab (21) aufgebrachte Kraft einen Vorspanngrenzwert des Federelements (23) übersteigt.

12. Netzanordnung (1) nach Anspruch 11, **dadurch gekennzeichnet, dass** der Druckstab (21) zumindest einen adapterseitigen Befestigungspunkt (19) zwischen den frachtraumseitigen Befestigungspunkten (17), an denen der Druckstab (21) bereitgestellt ist, bereitstellt, und/oder einen adapterseitigen Befestigungspunkt (19) an einem Ende des Druckstabes (21) bereitstellt.

## Claims

1. A netting arrangement (1) for a cargo hold (9) in an airplane, comprising:
at least one netting (3, 3', 3") including a plurality of circumferential fixation points (11) formed on an edge side of the netting (3, 3', 3"), and
at least one adapter (7, 13, 15, 21) for securing the netting (3, 3', 3") in the cargo hold (9),
wherein the adapter (7, 13, 15, 21) can be secured to at least two of a plurality of fixation points (17) on the cargo hold side so as to divert a load applied to the adapter (7, 13, 15, 21) into the at least two fixation points (17) on the cargo hold side,
**characterized in that**
the adapter (7, 13, 15, 21) is arranged in the path of force between the netting fixation points (11) formed on the edge side and the fixation points (17) on the cargo hold side,
wherein the adapter (7, 13, 15, 21) furnishes at least one adapter-side fixation point (19) for securing the netting (3, 3', 3") to the adapter (7, 13, 15, 21),
wherein the fixation points for the netting (3, 3', 3") are arranged in a plane identical with the plane of the adapter-side fixation points (19), independently of the load applied on the netting (3, 3', 3"),
wherein, in the condition where no load is applied on the netting (3, 3', 3"), the netting (3, 3', 3") is situated in the same plane as the adapter-side fixation points (19), and
wherein the netting (3, 3', 3") is circumferentially fixed in the cargo hold (9) by means of a combination of the fixation points (17) formed on the cargo hold side and the at least one adapter-side fixation point (19).

2. The netting arrangement (1) according to claim 1, **characterized in that** the adapter (7, 13, 15, 21) has the form of a bar (7) extending transversely in the width direction of the cargo hold (9) so as to receive a number of belt members of the netting (3, 3', 3"), wherein the bar (7) is arranged along a number of fixation points (17) on the cargo hold side preferably formed at the ceiling of the cargo hold (9), and is secured in at least one direction in at least one fixation point (17) on the cargo hold side, wherein
the bar (7) further comprises connecting links (31) connecting the transversely extending bar (7) with further fixation points (17) on the cargo hold side, and wherein
the bar (7) is adapted to distribute forces applied to the bar (7) onto fixation points (17) on the cargo hold side.

3. The netting arrangement (1) according to claim 2, **characterized in that** the bar (7) is adapted to introduce a first force applied to the bar (7) into the at least one fixation point (17) on the cargo hold side in which the bar (7) is secured, and **in that** the bar (7) is further adapted to distribute a second force applied to it onto further fixation points (17) on the cargo hold side through a controlled deformation of the bar (7).

4. The netting arrangement (1) according to claim 2 or 3, **characterized in that**, starting from a particular degree of deformation of the bar (7), the connecting links (31) enter into contact with other fixation points (17) on the cargo hold side.

5. The netting arrangement (1) according to any one of claims 2 to 4, **characterized in that** each connecting link (31) has a substantially tongue-type configuration and includes an opening.

6. The netting arrangement (1) according to claim 5, **characterized in that** the opening extends in the longitudinal direction of the cargo hold or in the width direction of the cargo hold and enters into contact with the fixation point (17) on the cargo hold side depending on the degree of deformation of the bar (7).

7. The netting arrangement (1) according to claim 1, **characterized in that** the adapter (15) has a bridge-type configuration, interconnects at least two fixation points (17) on the cargo hold side, and furnishes at least one adapter-side fixation point (19) between the two fixation points (17) on the cargo hold side.

8. The netting arrangement (1) according to claim 7, **characterized in that** the adapter (15) extends in the width direction of the cargo hold (9).

9. The netting arrangement (1) according to claim 1, **characterized in that** the adapter (7, 13, 15, 21) has the form of a longitudinal fixation member (13) extending in the longitudinal direction of the cargo hold (9), wherein
the fixation member (13) is secured to at least two fixation points (17) on the cargo hold side that extend along a longitudinal line of the cargo hold, wherein the fixation member (13) furnishes at least one adapter-side fixation point (19), and wherein
the fixation member (13) distributes loads applied to it in the longitudinal direction onto those fixation points (17) on the cargo hold side to which the fixation member (13) is secured.

10. The netting arrangement (1) according to claim 9, **characterized in that** the longitudinal fixation member (13) furnishes at least one adapter-side fixation point (19) between the fixation points (17) on the cargo hold side to which the fixation member (13) is secured, and/or furnishes an adapter-side fixation point (19) at one end of the longitudinal fixation member (13).

11. The netting arrangement (1) according to claim 1, **characterized in that**
the adapter (7, 13, 15, 21) has the form of a longitudinal compression bar (21) including at least one pre-tensioned spring element (23) for a controlled distribution of forces, the compression bar (21) extending in the longitudinal direction of the cargo hold (9), wherein
the compression bar (21) is secured to at least two fixation points (17) extending along a longitudinal line in the cargo hold (9), wherein
the compression bar (21) furnishes at least one adapter-side fixation point (19), wherein
the compression bar (21) distributes forces applied to it in the longitudinal direction through the intermediary of the pre-tensioned spring element (23), and wherein
the compression bar (21) distributes the forces applied to it into the fixation points (17) on the cargo hold side to which the compression bar (21) is secured, in case a force applied to the compression bar (21) exceeds a pre-tension threshold of the spring element (23).

12. The netting arrangement (1) according to claim 11, **characterized in that** the compression bar (21) furnishes at least one adapter-side fixation point (19) between the fixation points (17) on the cargo hold side at which the compression bar (21) is provided, and/or furnishes an adapter-side fixation point (19) at one end of the compression bar (21).

## Revendications

1. Agencement de filet (1) pour une soute (9) d'un avion comportant :
au moins un filet (3, 3', 3") avec une pluralité de points de fixation (11) rotatifs, réalisés côté bord sur le filet (3, 3', 3") et
au moins un adaptateur (7, 13, 15, 21) servant à fixer le filet (3, 3', 3") dans la soute (9),
sachant que l'adaptateur (7, 13, 15, 21) peut être placé au niveau au moins de deux points de fixation d'une pluralité de points de fixation côté soute (17) pour dévier une charge appliquée sur l'adaptateur (7, 13, 15, 21) sur les points de fixation côté soute (17) au moins au nombre de deux,
**caractérisé en ce que**
l'adaptateur (7, 13, 15, 21) est disposé sur le trajet de force entre les points de fixation du filet (11) réalisés côté bord et les points de fixation côté soute (17),
sachant que l'adaptateur (7, 13, 15, 21) met à disposition au moins un point de fixation côté adaptateur (19) servant à fixer le filet (3, 3', 3") au niveau de l'adaptateur (7, 13, 15, 21),
sachant que les points de fixation pour le filet (3, 3', 3") sont disposés dans un plan de manière identique par rapport au plan des points de fixation côté adaptateur (19), indépendamment de la charge appliquée sur le filet (3, 3', 3"),
sachant que le filet (3, 3', 3") se trouve dans le même plan que les points de fixation côté adaptateur (19) tant qu'aucune charge n'est appliquée sur le filet (3, 3', 3") et
sachant que le filet (3, 3', 3") est fixé de manière rotative dans la soute (9) par une combinaison de points de fixation côté soute (17) et par le point de fixation côté adaptateur (19) au moins au nombre de un.

2. Agencement de filet (1) selon la revendication 1, **caractérisé en ce que** l'adaptateur (7, 13, 15, 21) est réalisé comme une barre (7) s'étendant transversalement, dans le sens de la largeur de la soute (9), afin de recevoir une pluralité d'éléments formant des sangles de filet (3, 3', 3"), sachant que la barre (7) est disposée le long d'une pluralité de points de fixation côté soute (17) réalisés de préférence au niveau du plafond de la soute (9) et qu'elle est bloquée dans au moins une direction dans au moins un point de fixation côté soute (17), sachant que
la barre (7) présente en outre des membres de liaison (31) servant à relier la barre (7) s'étendant de manière transversale à d'autres points de fixation côté soute (17), et sachant que
la barre (7) est appropriée pour répartir des forces appliquées sur la barre (7) sur des points de fixation côté soute (17).

3. Agencement de filet (1) selon la revendication 2, **caractérisé en ce que** la barre (7) est appropriée pour introduire une première force appliquée sur la barre (7) dans le point de fixation côté soute (17) au moins au nombre de un, dans lequel la barre (7) est bloquée, et **en ce que** la barre (7) est en outre appropriée pour répartir une deuxième force appliquée sur elle-même sur d'autres points de fixation côté soute (17) grâce à une déformation contrôlée de la barre (7).

4. Agencement de filet (1) selon la revendication 2 ou 3, **caractérisé en ce que** les membres de liaison (31) viennent en contact avec d'autres points de fixation côté soute (17) à partir d'un certain de degré de déformation de la barre (7).

5. Agencement de filet (1) selon l'une quelconque des revendications 2 à 4, **caractérisé en ce que** chaque membre de liaison (31) est réalisé essentiellement sous forme de langue et présente une ouverture.

6. Agencement de filet (1) selon la revendication 5, **caractérisé en ce que** l'ouverture s'étend dans le sens de la longueur de la soute ou dans le sens de la largeur de la soute et vient en contact avec le point de fixation côté soute (17) selon respectivement le degré de déformation de la barre (7).

7. Agencement de filet (1) selon la revendication 1, **caractérisé en ce que** l'adaptateur (15) est réalisé sous forme de pont, relie au moins deux points de fixation côté soute (17) et met à disposition au moins un point de fixation côté adaptateur (19) entre les deux points de fixation côté soute (17).

8. Agencement de filet (1) selon la revendication 7, **caractérisé en ce que** l'adaptateur (15) s'étend dans le sens de la largeur de la soute (9).

9. Agencement de filet (1) selon la revendication 1, **caractérisé en ce que** l'adaptateur (7, 13, 15, 21) est réalisé comme un élément de fixation (13) allongé s'étendant dans le sens de la longueur de la soute (9),
sachant que
l'élément de fixation (13) est placé au niveau au moins de deux points de fixation côté soute (17), lesquels s'étendent le long d'une ligne longitudinale de la soute, sachant que
le point de fixation (13) met à disposition au moins un point de fixation côté adaptateur (19), et sachant que
le point de fixation (13) répartit des charges appliquées sur lui-même dans le sens de la longueur sur les points de fixation côté soute (17), au niveau desquels est placé l'élément de fixation (13).

10. Agencement de filet (1) selon la revendication 9, **caractérisé en ce que** l'élément de fixation (13) s'étendant longitudinalement met à disposition au moins un point de fixation côté adaptateur (19) entre les points de fixation côté soute (17), au niveau desquels est placé l'élément de fixation (13), et/ou met à disposition un point de fixation côté adaptateur (19) au niveau d'une extrémité de l'élément de fixation (13) s'étendant longitudinalement.

11. Agencement de filet (1) selon la revendication 1, **caractérisé en ce que** l'adaptateur (7, 13, 15, 21) est réalisé comme une barre comprimée (21) s'étendant longitudinalement comportant au moins un élément ressort (23) précontraint servant à répartir de manière commandée des forces, la barre comprimée (21) s'étendant dans le sens de la longueur de la soute (9),
sachant que la barre comprimée (21) est placée sur au moins deux points de fixation (17), lesquels s'étendent le long d'une ligne longitudinale dans la soute (9),
sachant que la barre comprimée (21) met à disposition au moins un point de fixation côté adaptateur (19),
sachant que la barre comprimée (21) répartit dans le sens de la longueur des forces appliquées sur elle-même au moyen de l'élément ressort (23) précontraint,
et sachant que la barre comprimée (21) répartit les forces appliquées sur elle-même sur les points de fixation côté soute (17), au niveau desquels est placée la barre comprimée (21) si une force appliquée sur ladite barre comprimée (21) dépasse une valeur seuil de précontrainte de l'élément ressort (23).

12. Agencement de filet (1) selon la revendication 11, **caractérisé en ce que** la barre comprimée (21) met à disposition au moins un point de fixation côté adaptateur (19) entre les points de fixation côté soute (17), au niveau desquels est mise à disposition la barre comprimée (21), et/ou met à disposition un point de fixation côté adaptateur (19) au niveau d'une extrémité de la barre comprimée (21).
